**Europäisches Patentamt**

**European Patent Office**

**Office européen des brevets**

(19)

(11) Veröffentlichungsnummer: **0 090 969**
**B1**

(12) **EUROPÄISCHE PATENTSCHRIFT**

(45) Veröffentlichungstag der Patentschrift:
04.09.85

(21) Anmeldenummer: 83102583.8

(22) Anmeldetag: 16.03.83

(51) Int. Cl.⁴: **D 21 C 3/20,** D 21 C 3/26,
D 21 C 7/00, D 21 C 11/00,
C 08 B 37/14, C 08 H 5/00

(54) Verfahren und Reaktor zum kontinuierlichen Aufschliessen von Pflanzenfasermaterial.

(30) Priorität: 06.04.82 DE 3212767

(43) Veröffentlichungstag der Anmeldung:
12.10.83 Patentblatt 83/41

(45) Bekanntmachung des Hinweises auf die Patenterteilung:
04.09.85 Patentblatt 85/36

(84) Benannte Vertragsstaaten:
BE DE FR GB NL SE

(56) Entgegenhaltungen:
EP - A - 0 012 960
WO - A - 79/00119
DE - A - 1 517 143
DE - A - 2 637 449
DE - B - 2 644 155
FR - A - 2 370 121
US - A - 3 585 104

ABSTRACT BULLETIN OF THE INSTITUTE OF PAPER
CHEMISTRY, Band 48, Nr. 1, Juli 1977, Seite 64,
Zusammenfassung Nr. 384, Appleton, Wisconsin, USA J.
NAKANO et al.: "Studies on alkali-methanol cooking.
(1). Disolution behavior of ligning and carbohydrate"
ABSTRACT BULLETIN OF THE INSTITUTE OF PAPER
CHEMISTRY; Band 48, Nr. 9, März 1978, Seite 993,
Zusammenfassung Nr. 9255, Appleton, Wisconsin, USA

(73) Patentinhaber: MD-Organocell Gesellschaft für
Zellstoff- und Umwelttechnik mbH, Planegger
Strasse 38, D-8000 München 60 (DE)

(72) Erfinder: Baumeister, Manfred, Dr. Dipl.-Chem.,
Eschenrieder Strasse 62, D-8031 Gröbenzell (DE)
Erfinder: Edel, Eugen, Dipl.-Ing., Am Waldrand 12 A,
D-8000 München 70 (DE)

(74) Vertreter: Dahlmann, Gerhard, Dipl.-Ing., Am Feldrain 20,
D-6940 Weinheim (DE)

(56) Entgegenhaltungen: (Fortsetzung)
J. NAKANO et al.: "Studies on alkali-methanol cooking.
(2). Strenght of pulp sheet and recovery of methanol"
TAPPI JOURNAL, Band 65, Nr. 10, Oktober 1982, Seite
29, rechte Spalte, Atlanta, Giorgia, USA "Benefits of
solvent-sulfite pulping"

ACTORUM AG

## Beschreibung

Die Erfindung betrifft ein Verfahren und einen Reaktor zum kontinuierlichen Aufschliessen von Pflanzenfasermaterial, insbesondere von Holzschnitzeln, durch Behandlung mit einem Alkohol/Wassergemisch bei höheren Temperaturen, wobei das Pflanzenfasermaterial in einer Imprägniereinrichtung mit dem Alkohol/Wassergemisch imprägniert, einem Reaktor zugeführt und einer anschliessenden Wäsche unterzogen wird.

Es ist bekannt, dass die weitverbreiteten Verfahren zur Herstellung von Zellstoff für die Weiterverarbeitung zu Papier nach den sogenannten Sulfat- oder Sulfit-Verfahren arbeiten. Von Nachteil bei diesen Verfahren ist die starke Umweltbelastung durch die anfallenden Abwasser und Abgase, insbesondere durch ihren Schwefelgehalt.

Im Hinblick auf die genannten Nachteile der konventionellen Verfahren wurden auch bereits Verfahren zum kontinuierlichen Aufschliessen von Pflanzenfasermaterial bekannt, bei denen keine Schwefelverbindungen zum Einsatz kommen und bei denen neben der Zellulose auch die anderen im Pflanzenfaserstoff enthaltenen Substanzen wie Lignin und Hemizellulose gewonnen werden können. Die Verfahren werden bei erhöhten Temperaturen und erhöhtem Druck durchgeführt. Ein solches Verfahren ist beispielsweise in der DE-A Nr. 2855052 (EP-A Nr. 0012960) behandelt. Bei diesem Verfahren werden Holzschnitzel mit einem Alkohol/Wassergemisch behandelt und zwar sowohl während der Imprägnierung als auch während der Kochphase im Reaktor. An die Kochzone schliesst sich eine Waschzone an. Das Verfahren liefert gute Ergebnisse.

Der vorliegenden Erfindung liegt die Aufgabe zugrunde, ein Verfahren und eine Vorrichtung zum kontinuierlichen Aufschliessen von Pflanzenfasermaterial mit organischen Lösungsmitteln zu schaffen, das sich durch eine einfache Verfahrensführung auszeichnet, das umweltfreundlich ist und bei dem die wesentlichen Bestandteile des Pflanzenfasermaterials, nämlich Zellulose, Hemizellulose und Lignin, getrennt und in reiner Form gewonnen werden können.

Die Lösung der gestellten Aufgabe wird bei einem Verfahren der eingangs genannten Art erfindungsgemäss dadurch erreicht, dass das Verfahren in einem Reaktor in zwei Stufen durchgeführt wird, wobei in der ersten Stufe eine Extraktion mit einem Methanol/Wassergemisch von 90 zu 10 Gew.-%, vorzugsweise 65 zu 45 Gew.-%, bei einer Kochzeit von 120 bis 40 Minuten, vorzugsweise 70 bis 50 Minuten, und einer Kochtemperatur von 180 bis 210°C, vorzugsweise 195 bis 205°C, und einem pH-Wert von 4,9 bis 3,8, vorzugsweise von 4,0 bis 4,5, erfolgt, das Fasermaterial der zweiten Stufe zugeführt wird und in der zweiten Stufe eine weitere Extraktion unter Zugabe der gleichen Extraktionsflüssigkeit in den obigen Mischungsverhältnissen, jedoch mit einem höheren Wasseranteil als in der ersten Stufe, mit einer Kochzeit von 80 bis 10 Minuten, einer Kochtemperatur von 150 bis 190°C, vorzugsweise 160 bis 175°C, unter Beigabe einer wässerigen Natrium-Hydroxydlösung in einer Menge von 5 bis 30 Gew.-%, vorzugsweise 20 bis 25 Gew.-%, Natriumhydroxyd bezogen auf atro Pflanzenfasermaterial und Anthrachinon in einer Menge von 0,01 bis 0,18 Gew.-%, vorzugsweise 0,08 Gew.-%, Anthrachinon bezogen auf atro Pflanzenfasermaterial, durchgeführt wird, dass aus jeder Stufe ein Teil der mit Extraktionsstoffen gesättigten Extraktionsflüssigkeit kontinuierlich abgeführt wird, und dass das Pflanzenfasermaterial nach der Extraktion einer Wäsche unterzogen wird.

Es zeigt sich, dass mit dem neuen Verfahren besonders gute Ergebnisse erzielt werden können. Das Pflanzenfasermaterial wird im Gegenstrom zur Extraktionsflüssigkeit geführt. Bezogen auf das Fasermaterial wird die Extraktionsflüssigkeit in drei- bis zwanzigfacher, vorzugsweise sieben- bis zehnfacher, Volumenmenge bezogen auf atro Pflanzenfasermaterial eingesetzt. Der Druck in den Extraktionsbehältern liegt über 10 bar, vorzugsweise bei 12 bis 40 bar.

Die Verwendung von Anthrachinon und Natriumhydroxyd beim Aufschluss von Pflanzenmaterial ist an sich durch die FR-A Nr. 2370121 bekannt, jedoch wird bei dem Verfahren kein Alkohol/Wassergemisch als Extraktionskomponente verwendet. Es handelt sich dabei um das als „Soda-Prozess" bekannte Verfahren.

Es ist günstig, wenn nach der Extraktion eine zweimalige Wäsche des Fasermaterials erfolgt. Sowohl die erste als auch die zweite Wäsche wird mit Wasser durchgeführt. Dabei ist es günstig, wenn bei der ersten Wäsche das einfliessende Wasser eine Temperatur von 40 bis 50°C hat. Die im Stoff sich einstellende Temperatur liegt dann bei 110 bis 130°C. Bevorzugt wird eine Stofftemperatur von 120°C eingestellt. Die Waschvorgänge können in gleicher Weise wie die Extraktionsvorgänge im Gegenstrom erfolgen. Als günstig hat sich ein Verfahren erwiesen, bei dem der erste Waschvorgang im Gegenstrom und der zweite Waschvorgang im Gleichstrom erfolgt. Der erste Waschvorgang wird dabei in das untere Ende des Reaktors gelegt, während der zweite Waschvorgang nach dem Austrag des Stoffs aus dem Reaktor kurz vor einer Bleiche des Zellstoffs durchgeführt wird. Zur Lösungsmittelrückgewinnung kann zwischen den Waschvorgängen ein Strippvorgang eingesetzt werden. Auch dieser Strippvorgang wird ausserhalb des Extraktionsreaktors vorgesehen.

Gute Ergebnisse können auch mit einer Zwischenwäsche nach der ersten Stufe erreicht werden. Bei der Zwischenwäsche wird als Waschmittel das Extraktionsmittel der ersten Stufe in den Mischungsverhältnissen wie in der ersten Stufe eingesetzt. Die Temperatur des Waschmittels beträgt 160 bis 140°C. Dadurch wird eine deutliche Trennung der einzelnen Extraktionsstufen erreicht. In der Waschzone selbst entsteht eine Temperatur von 175 bis 170°C.

Die Extraktionsflüssigkeiten für die einzelnen Extraktionsstufen werden jeweils in eigenen Kreisläufen geführt. Dadurch wird ein Verbrauch von Lösungsmitteln weitgehendst vermieden. Jeder Kreislauf hat einen Wärmetauscher zur Einstellung der Temperatur des Extraktionsmittels und eine Extraktionsmittelzugabeeinrichtung, über die die gewünschte Konzentration des Extraktionsmittelgemisches konstant gehalten wird. In den jeweiligen Kreislauf der einzelnen Stufen werden 10 bis 60%, vorzugsweise 30%, des Volumens des Extraktionsmittelgemisches beigegeben. Dieses entspricht der Menge des Extraktionsmittels, die mit der gesättigten Extraktionsflüssigkeit abgeführt wird.

Jeder Extraktionsstufe wird zur Abtrennung der Extraktionsstoffe Extraktionsflüssigkeit entnommen, die einer Entspannung und Kühlung unterworfen wird. Das dabei anfallende Extraktionsmittel (Methanol/Wassergemisch) wird einem Sammelbehälter und damit dem Extraktionsmittelkreislauf zugeführt.

Die abgetrennte mit Extraktionsstoffen beladene Extraktionsflüssigkeit aus der ersten Stufe wird dann einem Fällbad zur Ausfällung des Lignins zugeleitet, und das Lignin wird sodann durch einen Filter abgetrennt und einer Trocknung unterzogen. Hiernach ist das Lignin für eine weitere Verwertung fertig. Die nach der Abtrennung des Lignins verbliebene Zuckerlösung wird einer Nachhydrolyse mit anschliessender Zuckerverwertung oder einer Hyperfiltration unterzogen.

Die aus der zweiten Extraktionsstufe entnommene und durch Entspannung und Kühlung angetrennte mit Extraktionsstoffen beladene Extraktionsflüssigkeit wird einer Neutralisation unterzogen, mit anschliessender Abfilterung und Trocknung des Lignins. Die Rückstände aus der Filtration werden einer Eindampfung mit anschliessender Salzverwertung zugeführt.

Die den Extraktionsstufen vorgeschaltete Imprägnierung wird nach dem in der DE-A Nr. 2855052 vorgesehenen Verfahren durchgeführt. Die angewendete Temperatur beträgt zwischen 40 und 80°C, vorzugsweise etwa 60°C. Zusätzlich ist die Imprägniereinrichtung noch mit einem Zyklonabscheider zur Kondensation der Lösungsmitteldämpfe versehen.

Der Reaktor zur Durchführung des Verfahrens besteht im wesentlichen aus zwei nacheinander angeordneten Extraktionsbehältern, die jeweils mit einem Extraktionsmittelkreislauf versehen sind, wobei jeder Kreislauf einen eigenen Wärmetauscher zur Erhitzung des Extraktionsmittels hat.

Anhand eines in der Zeichnung dargestellten Ausführungsbeispiels wird die Erfindung nachstehend näher erläutert. Es zeigt:

Fig. 1 ein Verfahrensschema;

Fig. 2 einen Reaktor mit Zwischenwäsche.

Die Hackschnitzel 1 werden in den Trichter 2 eingegeben und von dort über ein Zellenrad 3 in einen auf die Imprägnierschnecke 4 aufgesetzten Behälter 5 eindosiert. Im Behälter 5, der als Dämpfkammer verwendet wird, erfolgt durch Niederdruckdampf, der über die Leitung 6 in den Behälter 5 eingeblasen wird, eine Aufheizung der Hackschnitzel 1 auf eine Temperatur von ca. 70 bis 80°C. Der Imprägnierschnecke 4 wird über die Leitung 7 ein Lösungsmittel/Wassergemisch zugeführt, im vorliegenden Fall ein Methanol/Wassergemisch, das eine Temperatur von 60°C hat. Die Niveauregulierung des Gemisches wird über das Niveaugefäss 8 erreicht. Die zwischen den aufgeheizten Hackschnitzeln 1 und der kühleren Imprägnierungsflüssigkeit bestehende Temperaturdifferenz bewirkt, dass es zu einer schlagartigen Kondensation von Dämpfen in den Holzporen kommt. Dadurch entsteht in den Poren ein Unterdruck und ein Einsaugen der Imprägnierflüssigkeit in die Poren des Holzes findet statt. Die ausgezeichnete Benetzungsfähigkeit des Alkohols in Verbindung mit der Lösefähigkeit für Terpene und Harze sowie die niedrige Viskosität der Imprägnierflüssigkeit führen zu einer weiteren Erleichterung des Penetrationsvorganges in die Hackschnitzelporen. Dies hat zur Folge, dass der Imprägniervorgang nach kürzester Zeit im Verlauf einiger Minuten abgeschlossen ist. Die Verweilzeit der Hackschnitzel 1 in der Imprägnierschnecke 4 beträgt, je nach Durchsatz zwischen 10 und 60 Minuten, vorzugsweise 20 bis 40 Minuten.

Die imprägnierten Hackschnitzel 1 werden mit der in ihrer Geschwindgkeit einstellbaren Schnekke 4 über eine Druckschleuse 10, die auch als Eintragsystem bezeichnet werden kann, in den Reaktor 11 eindosiert. Eine im Reaktor 11 angeordnete, nach unten weisende Schnecke 12 fördert die Hackschnitzel 1 unter den im Reaktor 11 befindlichen Flüssigkeitsspiegel, der durch das Niveaugefäss 13 konstant gehalten wird. Der obere Teil des Reaktors 11 bildet die erste Extraktionsstufe. Hier erfolgt die erste Kochung der Schnitzel 1. Hierfür wird dem Reaktor 11 über die Leitung 14 und die hohl ausgebildete Welle 15 der Schnecke 12, die die Hackschnitzel 1 nach unten drückt, die Extraktionsflüssigkeit zugeführt. Die Extraktionsflüssigkeit tritt, mit Pfeilen angedeutet, am unteren Ende der Welle 15 aus, fliesst nach oben und wird bei 16 und 17 dem Reaktor 11 wieder entnommen. Der überwiegende Teil der Extraktionsflüssigkeit, der bei 16 entnommen wird, wird über die Pumpe 18 dem Wärmetauscher 19 zugeführt, in dem die Aufheizung des Extraktionsmittels durchgeführt wird. Über die Leitung 14 gelangt das Extraktionsmittel wieder in den Reaktor 11 und der Kreislauf der I. Extraktionsstufe ist geschlossen. Ein kleinerer Teil der mit Extraktionsstoff gesättigten Extraktionsflüssigkeit wird bei 17 abgezogen und einem Entspannungs- und Kühlgefäss 20 zugeführt. Durch den Entspannungs- und Kühlvorgang wird das Extraktionsmittel von den Extraktionsstoffen, wie Lignin und Hemizellulose, getrennt und über die Leitung 21 in den Lösungsmittelbehälter 22 zurückgeführt. Der im Kreislauf zur I. Stufe entstehende Verlust an Extraktionsmittel wird aus dem Behälter 22 über die Leitung 23 ersetzt. Die durch die Entspannung und Kühlung abgetrennten und noch flüssigen Extraktionsstoffe werden über die Leitung 50 einem Fällbad 51 zugeführt, in dem das Lignin in Wasser ausgefällt wird. Danach wird das Lignin über einen Filter 52 abgetrennt und getrocknet. Die verbliebene Zuckerlösung wird entweder einer Nachhydrolyse 53 oder einer Hyperfiltration 54 vor ihrer kommerziellen Weiterverarbeitung unterzogen.

An die erste Stufe schliesst die zweite Stufe an. Auch hier wird die Extraktionsflüssigkeit im Gegenstrom zu den Hackschnitzeln 1 und in einem Kreislauf geführt. Die Erhitzung der Extraktionsflüssigkeit erfolgt in dem Wärmetauscher 24. Aus dem Wärmetauscher 24 wird das Extraktionsmittel über die Leitung 25 bei 55 in den Reaktor 11 eingespeist. Das Extraktionsmittel strömt von unten nach oben im Reaktor 11 und wird bei 26 und 27 aufgeteilt dem Reaktor wieder entnommen. Dabei wird wie bei der ersten Stufe der grössere Teil über die Leitung 28 dem Wärmetauscher 24 und der kleinere Teil als gesättigte Extraktionsflüssigkeit über die Leitung 29 einer Entspannungs- und Kühleinrichtung 30 zugeführt. Der bei 27 abgezogene Anteil an Extraktionsflüssigkeit wird aus dem Lösungsmittelbehälter 22 über die Leitung 23 ersetzt. Da in der zweiten Stufe ein Extraktionsmittel bevorzugt mit einem höheren Wasseranteil verwendet wird, ist die Einspeisung von Wasser über die Leitung 32 möglich. Bei der Entspannung und Kühlung in der Einrichtung 30 wird, wie an der entsprechenden Stelle der ersten Stufe, das Extraktionsmittel von 22 zugeführt. Die angetrennten Extraktionsstoffe dagegen werden mit einer geeigneten Säure neutralisiert. Hierfür ist der Behälter 56 vorgesehen. Nach der Neutralisation wird eine Filtration 57 zur Abtrennung des Lignins durchgeführt, das nach seiner Trocknung zur weiteren Verwertung fertig ist. Die Rückstände aus der Filtration werden im Behälter 58 eingedampft und die anfallenden Salze wieder aufbereitet. Die Zugabe der Natriumhydroxydlösung erfolgt über die Leitung 70. Eine weitere Leitung 71 ermöglicht die ebenfalls dosierbare Beigabe von Anthrachinon.

Die zweite Verfahrensstufe schliesst unmittelbar an die erste Verfahrensstufe an. Zwischen der ersten und der zweiten Stufe entsteht eine Grenzfläche durch eine Temperaturdifferenz von ca. 5 bis 10°C der Extraktionsflüssigkeiten. Dadurch wird die Extraktionsflüssigkeit der ersten Stufe nach oben umgelenkt.

Nach der Extraktion in der zweiten Stufe erfolgt ein Waschvorgang mit Wasser. Das Wasser wird über die Leitung 40 in den Reaktor 11 bei 60 eingeführt und über die Leitung 41 bei 61 wieder abgezogen. Das Wasser wird vorher erwärmt und mit einer Temperatur von ca. 45°C eingespeist, so dass eine Abkühlung der Schnitzel 1 auf etwa 120°C stattfindet. Das Waschwasser wird über die Leitung 41 in den Kreislauf der zweiten Extraktionsstufe vor dem Wärmetauscher 24 eingeleitet.

Die Ausschleusung der gekochten Hackschnitzel 1 erfolgt am Reaktorboden über eine Druckschleuse 42. Die Schnitzel 1 gelangen dann in einen Stripptank 43, in dem ein Strippvorgang mit Dampf zur Lösungsmittelrückgewinnung durchgeführt wird. Der Wasserdampf wird über die Leitung 44 in den Stripptank 43 eingeblasen und gelangt mit Extraktionsmittel beladen über die Leitung 45 in den Kühler 46 und von dort als Extraktionsmittel/Wassergemisch in den Behälter 22. Die Zellulose wird im Stoffbehälter 47 aufgefangen und von dort einer zweiten Wäsche im Behälter 48 zugeführt, die unmittelbar vor der Bleiche des Zellstoffs liegt. Das Waschwasser wird über die Leitung 49 in den Behälter 48 eingegeben und über die Leitung 59 abgezogen und in den Lösungsmittelbehälter 22 eingeleitet. Innerhalb des Behälters 48 bewegen sich das Waschwasser und die Zellulose im Gleichstrom, was den Austrag der Zellulose aus dem Behälter 48 unterstützt. Die bei der Imprägnierung in der Schnecke 4 und bei der Entspannung der Druckschleuse 10 entstehenden Dämpfe werden in dem Kühler 33 bzw. dem Zyklon 34 niedergeschlagen. Die Dämpfe werden den Gefässen über die Leitungen 35, 36 und 37 zugeführt. Das entstandene Lösungsmittel/Wassergemisch wird über die Leitung 38 dem Behälter 22 zugeführt, so dass auch hier eine Rückführung des Lösungsmittels gegeben ist.

Das Gesamtsystem ist, soweit der Einsatz des Lösungsmittels betroffen ist, in sich geschlossen. An allen Stellen der Anlage, an denen Lösungsmittel abgezogen wird, sind entsprechende Vorkehrungen getroffen, die eine Rückführung des Lösungsmittels bzw. des Extraktionsmittels in den Kreislauf des Verfahrens ermöglichen. Der dennoch unvermeidbare geringfügige Verbrauch des Lösungsmittels wird aus dem Lösungsmittelbehälter 31 ersetzt. Hierfür sind Dosierpumpen eingesetzt, die entsprechende Mengen in die einzelnen Kreisläufe der Extraktionsstufen einspeisen.

Das erfindungsgemässe zweistufige Verfahren berücksichtigt insbesondere die Tatsache, dass während des Aufschlusses die Delignifizierung und der Zelluloseabbau gegenläufig sind. In der ersten Stufe wurde bei hohen Temperaturen und leicht saurem pH-Wert eine Vorhydrolyse durchgeführt und anschliessend in der zweiten Stufe unter leicht alkalischen Bedingungen das Holz weiter aufgeschlossen. Mit dieser Verfahrensweise gelingt es, bei relativer Schonung der Zellulose, den Restligningehalt bis auf wenige Prozente zu senken.

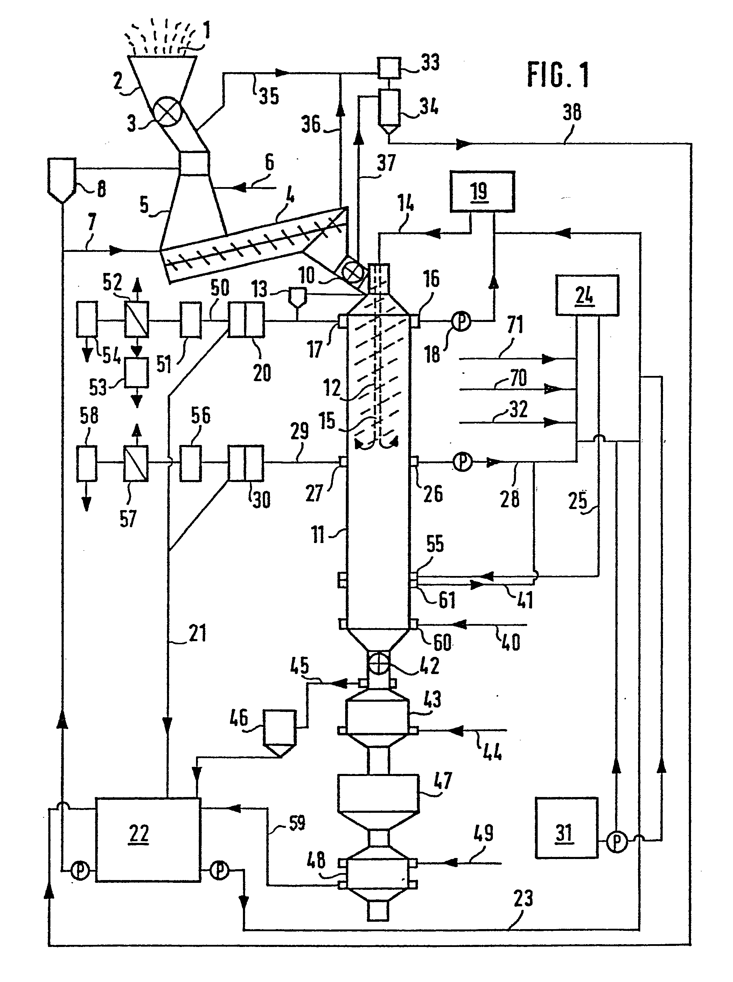

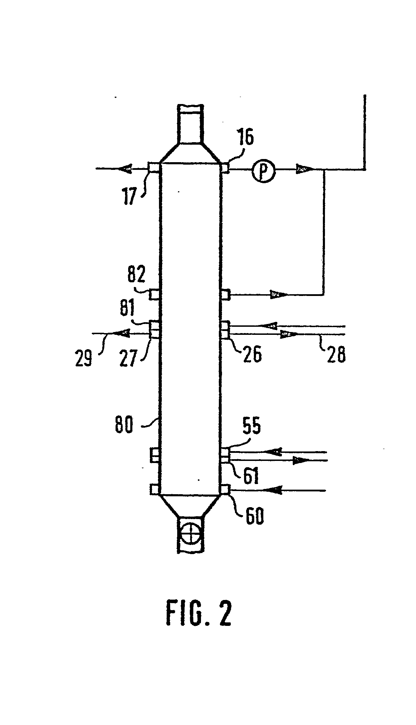

Diese äusserst schonende Behandlung der Zellulose kann durch einen Zwischenwaschvorgang noch unterstützt werden. Ein Reaktor 80, der eine Einrichtung für einen Zwischenwaschvorgang hat, ist in der Fig. 2 gezeigt. Der Reaktor 80 hat nach der I. Stufe zwei zusätzliche Ringleitungen 81 und 82, über die eine entsprechende Waschflüssigkeit eingeführt und wieder abgezogen werden kann. Als Waschflüssigkeit wird eine Flüssigkeit mit der gleichen Zusammensetzung wie das Extraktionsmittel der I. Stufe verwendet, jedoch mit einer Temperatur von 150 bis 120°C. Die Waschflüssigkeit wird an geeigneter Stelle dem Kreislauf der ersten Extraktionsstufe entnommen, auf entsprechende Temperatur gekühlt und in den Reaktor geleitet. Nach dem Waschvorgang wird die Waschflüssigkeit wieder in den Kreislauf zurückgeführt. Alle übrigen Teile des Reaktors 80 sind identisch mit den entsprechenden Teilen des Reaktors 11 aus der Fig. 1.

Mit der in Fig. 1 beschriebenen Anlage wurden bei einer Extraktion die folgenden Werte erhalten:

Nach dem Auffüllen des Reaktors mit Fichtenhackschnitzeln von 73% Trockengehalt wurden weitere Hackschnitzel in einer Menge von 8 kg/h kontinuierlich über das Zellenrad in die Dämpfkammer mit anschliessender Imprägnierung und über das Eintragssystem in die I. Extraktionsstufe des Reaktors eingetragen. Von dort wurden die Schnitzel der II. Extraktionsstufe zugeführt und danach in der Waschzone gewaschen und über das Austragssystem als Zellstoff ausgetragen.

Die Menge von 8 kg/h ergab aufgrund der Volumenverhältnisse im Reaktor eine Verweilzeit von 20 Minuten in der Imprägnierung, von 70 Minuten in der Extraktionsstufe I, von 60 Minuten in der Extraktionsstufe II und von 20 Minuten in der Waschzone.

Für die Imprägnierung und als Extraktionsflüssigkeit in der Extraktionsstufe I wurde ein Methanol/Wassergemisch von 53 Gew.-% Methanol verwendet. Die Menge der frisch zugeführten Extraktionsflüssigkeit betrug 28 kg/h entsprechend einem Flottenverhältnis von 1:3,5, bezogen auf das eingetragene Holz. Zur Imprägnierung der Hackschnitzel wurden in der Dämpfkammer 80°C und in der Imprägnierung 70°C eingestellt.

Die Temperatur der Extraktionsflüssigkeit der I. Stufe wurde über den Wärmetauscher auf 205°C gebracht.

Als Extraktionsflüssigkeit in der II. Stufe wurde ein Methanol/Wassergemisch mit 38 Gew.-% Methanol bei einer Temperatur von 170°C verwendet.

Die Methanolkonzentration wurde in beiden Extraktionsstufen dabei laufend überwacht und korrigiert. Ein Teil des Methanol/Wassergemisches wurde über die Gegenstromwäsche aus der Waschzone erhalten und dann mit 80%igem Methanol (ca. 26 l/h) auf die gewünschten 38 Gew.-% aufkonzentriert.

Pro Kilogramm Extraktionsflüssigkeit der II. Stufe wurden als Katalysatoren 35 g NaOH und 12 g Anthrachinon zugesetzt, entsprechend 25 Gew.-% bzw. 0,15 Gew.-% bezogen auf das frisch eingetragene Holz und entsprechend der Menge von 56 kg/h wie vor beschriebener Extraktionsflüssigkeit. Das Flottenverhältnis betrug damit 1:7 bezogen auf das frisch zugeführte Holz.

Das in die Waschzone zugeführte Wasser (30 kg/h) wurde vorher auf 70°C erwärmt, wodurch sich in der Waschzone eine mittlere Temperatur von 115°C einstellte.

Am Austrag wurden 2,4 kg/h atro Zellstoff erhalten, entsprechend einer Ausbeute von 41% bezogen auf kontinuierlich eingetragenes Holz atro gerechnet.

Der Zellstoff wurde anschliessend nochmals gewaschen und gebleicht.

Für den Zellstoff wurden folgende Werte gefunden:

| | | |
|---|---|---|
| Restlignin (Runkel) nach I. Stufe | 10,7% | (Lignin im Ausgangsholz 28%) |
| Restlignin (Runkel) nach II. Stufe und Wäsche | 3,0% | |
| Kappazahl | 15 | |
| Viskosität (Tappi 230sm-50 1%) | 115 | |
| α-Zellulosegehalt (17,5%iges NaOH) | 91,5 | |
| Reisslänge | 27°SR | 6070 m |
| | 281°SR | 8790 m |
| Fortreissfestigkeit | 27°SR | $1600 \frac{ml}{m}$ |
| | 81°SR | $1140 \frac{ml}{m}$ |

Es zeigte sich, dass das Lignin aus der ersten Stufe besonders gut in der Tiermedizin verwendbar ist.

**Patentansprüche**

1. Verfahren zum kontinuierlichen Aufschliessen von Pflanzenfasermaterial, insbesondere von Holzschnitzeln, durch Behandlung mit einem Alkohol/Wassergemisch bei höheren Temperaturen und Drücken, wobei das Pflanzenfasermaterial in einer Imprägniereinrichtung mit dem Alkohol/Wassergemisch imprägniert, einem Reaktor zugeführt und einer anschliessenden Wäsche unterzogen wird, dadurch gekennzeichnet, dass das Verfahren in einem Reaktor in zwei Stufen durchgeführt wird, wobei in der ersten Stufe eine Extraktion mit einem Methanol/Wassergemisch von 90 zu 10 Gew.-%, bei einer Kochzeit von 120 bis 40 Minuten und einer Kochtemperatur von 180 bis 210°C und einem pH-Wert von 4,9 bis 3,8 erfolgt, das Fasermaterial der zweiten Stufe zugeführt wird und in der zweiten Stufe eine weitere Extraktion unter Zugabe der gleichen Extraktionsflüssigkeit in den obigen Mischungsverhältnissen, jedoch mit einem höheren Wasseranteil als in der ersten Stufe, mit einer Kochzeit von 80 bis 10 Minuten, einer Kochtemperatur von 150 bis 190°C, unter Beigabe einer wässerigen Natriumhydroxydlösung in einer Menge von 5 bis 30 Gew.-%, vorzugsweise 20 bis 25 Gew.-% Natriumhydroxyd bezogen auf atro Pflanzenfasermaterial, und Anthrachinon in einer Menge von 0,01 bis 0,15 Gew.-%, vorzugsweise 0,08 Gew.-% Anthrachinon bezogen auf atro Pflanzenfasermaterial, durchgeführt wird, dass aus jeder Stufe ein Teil der mit Extraktionsstoffen gesättigten Extraktionsflüssigkeit kontinuierlich abgeführt wird, und dass das Pflanzenfasermaterial nach der Extraktion einer Wäsche unterzogen wird.

2. Verfahren nach Anspruch 1, dadurch gekennzeichnet, dass in der ersten Stufe das Methanol/Wassergemisch 65 zu 45 Gew.-%, die Kochzeit 70 bis 50 Minuten, die Kochtemperatur 195 bis 205°C und der pH-Wert 4,0 bis 4,5 beträgt, und dass in der zweiten Stufe eine Kochtemperatur von 160 bis 175°C gewählt wird.

3. Verfahren zum kontinuierlichen Aufschliessen von Pflanzenfasermaterial nach einem der Ansprüche 1 oder 2, dadurch gekennzeichnet, dass das Pflanzenfasermaterial im Gegenstrom zur Extraktionsflüssigkeit geführt wird.

4. Verfahren zum kontinuierlichen Aufschliessen von Pflanzenfasermaterial nach einem der Ansprüche 1 bis 3, dadurch gekennzeichnet, dass bezogen auf das Pflanzenfasermaterial die Extraktionsflüssigkeit in 3- bis 20facher, vorzugsweise 7- bis 10facher, Volumenmenge bezogen auf atro Pflanzenfasermaterial eingesetzt wird.

5. Verfahren zum kontinuierlichen Aufschliessen von Pflanzenfasermaterial nach einem der Ansprüche 1 bis 4, dadurch gekennzeichnet, dass der Druck in dem Reaktor über 10 bar, vorzugsweise 12 bis 14 bar beträgt.

6. Verfahren zum kontinuierlichen Aufschliessen von Pflanzenfasermaterial nach einem der Ansprüche 1 bis 5, dadurch gekennzeichnet, dass nach der Extraktion das Pflanzenfasermaterial einer zweimaligen Wäsche unterworfen wird.

7. Verfahren zum kontinuierlichen Aufschliessen von Pflanzenfasermaterial nach einem der Ansprüche 1 bis 6, dadurch gekennzeichnet, dass die erste und die zweite Wäsche mit Wasser durchgeführt wird.

8. Verfahren zum kontinuierlichen Aufschliessen von Pflanzenfasermaterial nach einem der Ansprüche 1 bis 7, dadurch gekennzeichnet, dass das Wasser der ersten Wäsche eine Temperatur von ca. 40 bis 50°C hat.

9. Verfahren zum kontinuierlichen Aufschliessen von Pflanzenfasermaterial nach einem der Ansprüche 1 bis 8, dadurch gekennzeichnet, dass die Waschvorgänge im Gegenstrom erfolgen.

10. Verfahren zum kontinuierlichen Aufschliessen von Pflanzenfasermaterial nach einem der Ansprüche 1 bis 9, dadurch gekennzeichnet, dass zwischen den Waschvorgängen ein Strippvorgang zur Lösungsmittelrückgewinnung vorgesehen ist.

11. Verfahren zum kontinuierlichen Aufschliessen von Pflanzenfasermaterial nach einem der Ansprüche 1 bis 10, dadurch gekennzeichnet, dass nach der ersten Stufe eine Zwischenwäsche mit dem Extraktionsmittel der ersten Stufe in den genannten Mischungsverhältnissen erfolgt, wobei das Waschmittel eine Temperatur von 160 bis 140°C hat und in der Waschzone eine Temperatur von 175 bis 170°C entsteht.

12. Verfahren zum kontinuierlichen Aufschliessen von Pflanzenfasermaterial nach einem der Ansprüche 1 bis 11, dadurch gekennzeichnet, dass die Extraktionsflüssigkeiten für die einzelnen Extraktionsstufen in jeweils eigenen Kreisläufen geführt werden.

13. Verfahren zum kontinuierlichen Aufschliessen von Pflanzenfasermaterial nach einem der Ansprüche 1 bis 12, dadurch gekennzeichnet, dass jeder Kreislauf mit einem Wärmetauscher zur Einstellung der Temperatur des Extraktionsmittels versehen ist.

14. Verfahren zum kontinuierlichen Aufschliessen von Pflanzenfasermaterial nach einem der Ansprüche 1 bis 13, dadurch gekennzeichnet, dass jeder Kreislauf eine Extraktionsmittelzugabeeinrichtung hat, über die die gewünschte Konzentration des Extraktionsmittelgemisches konstant gehalten wird.

15. Verfahren zum kontinuierlichen Aufschliessen von Pflanzenfasermaterial nach Anspruch 14, dadurch gekennzeichnet, dass in den jeweiligen Kreislauf der einzelnen Stufen frisches Extraktionsmittel in einer Menge von 10 bis 60%, vorzugsweise 30%, des Volumens des Extraktionsmittelgemisches beigegeben wird.

16. Verfahren zum kontinuierlichen Aufschliessen von Pflanzenfasermaterial nach einem der Ansprüche 1 bis 15, dadurch gekennzeichnet, dass die der ersten Extraktionsstufe entnommene Extraktionsflüssigkeit zur Abtrennung der Extraktionsstoffe einer Entspannung und Kühlung unterworfen wird und dass die abgetrennten Extraktionsstoffe einem Fällbad zur Ausfällung des Lignins zugeführt werden.

17. Verfahren zum kontinuierlichen Aufschliessen von Pflanzenfasermaterial nach Anspruch 16, dadurch gekennzeichnet, dass das Lignin durch einen Filter oder eine Zentrifuge abgetrennt und einer Trocknung unterworfen wird.

18. Verfahren zum kontinuierlichen Aufschliessen von Pflanzenfasermaterial nach Anspruch 17, dadurch gekennzeichnet, dass die nach der Abtrennung des Lignins verbliebene Zuckerlösung einer Nachhydrolyse mit anschliessender Zuckerverwertung oder einer Feinfiltration unterzogen wird.

19. Verfahren zum kontinuierlichen Aufschliessen von Pflanzenfasermaterial nach einem der Ansprüche 1 bis 18, dadurch gekennzeichnet, dass die der zweiten Extraktionsstufe entnommene Extraktionsflüssigkeit zur Abtrennung der Extraktionsstoffe einer Entspannung und Kühlung unterworfen wird, und dass die abgetrennten Extraktionsstoffe einer Neutralisation unterzogen werden mit anschliessender Abfilterung und Trocknung des Lignins.

20. Verfahren zum kontinuierlichen Aufschliessen von Pflanzenfasermaterial nach Anspruch 19, dadurch gekennzeichnet, dass die Rückstände aus der Filtration einer Eindampfung und Salzaufbereitung zugeführt werden.

21. Verfahren zum kontinuierlichen Aufschliessen von Pflanzenfasermaterial nach einem der Ansprüche 16 bis 20, dadurch gekennzeichnet, dass das nach der Entspannung und Kühlung anfallende Methanol/Wassergemisch in den Extraktionsmittelkreis rückgeführt wird.

22. Reaktor zur Durchführung des Verfahrens nach Anspruch 1, gekennzeichnet durch zwei nacheinander angeordnete Extraktionsbehälter, die jeweils mit einem Extraktionsmittelkreislauf versehen sind, wobei jeder Kreislauf einen eigenen Wärmetauscher zur Erhitzung des Extraktionsmittels hat.

23. Reaktor nach Anspruch 22, dadurch gekennzeichnet, dass das Eintragungssystem (10) mit einem Zyklonabschneider (34) zur Kondensation der Lösungsmitteldämpfe versehen ist.

## Claims

1. A process for the continuous extraction of material from fibrous vegetable material, particularly wood chips, by treatment with an alcohol-water mixture at elevated temperatures and pressures, wherein the fibrous vegetable matter is impregnated with the alcohol-water mixture in an impregnating device, passed to a reactor and is subjected to a subsequent washing, characterised in that the process is carried out in a reactor in two stages, wherein in the first stage an extraction takes place with a methanol-water mixture of 90 to 10 weight % for a digestion period of 120 to 40 minutes and a digestion temperature of 180 to 210°C and at a pH value of 4.9 to 3.8, the fibrous material is passed to the second stage, and in the second stage ensues a further extraction with the addition of the same extraction fluid in the above mixture proportions but with a higher proportion of water than in the first stage, with a digestion time of 80 to 10 minutes, a digestion temperature of 150 to 190°C under addition of an aqueous solution of sodium hydroxide in an amount of 5 to 30 weight %, preferably 20 to 24 weight %, sodium hydroxide based on the weight of dry fibrous vegetable material and anthraquinone in an amount of 0.01 to 0.15 weight %, preferably 0.08 weight % anthraquinone relative to dry fibrous vegetable matter; in that from each stage a portion of the extraction fluid saturated with extraction materials is continually removed; and that after extraction, the fibrous vegetable matter is subjected to a washing.

2. A process according to claim 1, characterised in that in the first stage the methanol-water mixture is 65 to 45 weight %, the digestion time is 70 to 50 minutes, the digestion temperature is 195 to 205°C, and the pH value is 4.0 to 4.5, and that in the second stage a digestion temperature of 160 to 75°C is selected.

3. A process for the continuous extraction of material from fibrous vegetable material according to one of claims 1 or 2, characterised in that the fibrous vegetable matter is passed in countercurrent to the extraction fluid.

4. A process for the continuous extraction of material from fibrous vegetable matter according to one of claims 1 to 3, characterised in that relative to the fibrous vegetable matter, the volume of extraction liquid used is 3 to 20 times, preferably 7 to 10 times, that of dry fibrous vegetable matter.

5. A process for the continuous extraction of material from fibrous vegetable matter according to one of claims 1 to 4, characterised in that the pressure in the reactor is over 10 bar, preferably 12 to 14 bar.

6. A process for the continuous extraction of material from fibrous vegetable matter according to one of claims 1 to 5, characterised in that after extraction the fibrous vegetable material is subjected to two washings.

7. A process for the continuous extraction of material from fibrous vegetable matter according to one of claims 1 to 6, characterised in that the first and the second washings are carried out with water.

8. A process for the continuous extraction of material from fibrous vegetable matter according to one of claims 1 to 7, characterised in that the temperature of the water in the first washing is approximately 40 to 50°C.

9. A process for the continuous extraction of material from fibrous vegetable matter according to one of claims 1 to 8, characterised in that the washing processes take place in countercurrent.

10. A process for the continuous extraction of material from fibrous vegetable matter according to one of claims 1 to 9, characterised in that between the washing processes a stripping process for solvent recovery is provided.

11. A process for the continuous extraction of material from fibrous vegetable matter according to one of claims 1 to 10, characterised in that after the first stage an intermediate washing takes place with the extraction medium of the first stage having the stated concentrations, wherein the washing medium has a temperature of 160 to 140°C and a temperature of 175 to 170°C arises in the washing zone.

12. A process for the continuous extraction of material from fibrous vegetable matter according to one of claims 1 to 11, characterised in that the extraction fluids for the individual extraction stages are conducted in respective individual circuits.

13. A process for the continuous extraction of material from fibrous vegetable matter according to one of claims 1 to 12, characterised in that each circuit is provided with a heat-exchanger for adjusting the temperature of the extraction medium.

14. A process for the continuous extraction of material from fibrous vegetable matter according to one of claims 1 to 13, characterised in that each circuit has apparatus for adding extraction medium by means of which the desired concentration of the extraction medium mixture is held constant.

15. A process for the continuous extraction of material from fibrous vegetable matter according to one of claims 1 to 14, characterised in that in the respective circuits of the individual stages fresh extraction medium is added in an amount of 10 to 60%, preferably 30%, of the volume of the extraction medium mixture.

16. A process for the continuous extraction of material from fibrous vegetable matter according to one of claims 1 to 15, characterised in that the extraction fluid taken from the first extraction stage is subjected to expansion and cooling to separate the extraction materials, and that the separated extraction materials are passed to a coagulating bath for precipitating lignin.

17. A process for the continuous extraction of material from fibrous vegetable matter according to one of claims 1 to 16, characterised in that the lignin is separated by means of a filter or a centrifuge and is subjected to drying.

18. A process for the continuous extraction of material from fibrous vegetable matter according to one of claims 1 to 17, characterised in that the sugar solution remaining after separation of the lignin is subjected to an after-treatment by hydrolysis with subsequent utilisation of the sugar or is subjected to fine filtration.

19. A process for the continuous extraction of material from fibrous vegetable matter according to one of claims 1 to 18, characterised in that the extraction fluid taken from the second extraction stage is subjected to expansion and cooling to separate the extraction materials, and that the separated extraction materials are subjected to neutralisation with subsequent filtering and drying of the lignin.

20. A process for the continuous extraction of material from fibrous vegetable matter according to one of claims 1 to 19, characterised in that the residue from the filtration is passed to an evaporation and salt recovery stage.

21. A process according to one of claims 16 to 20, characterised in that the methanol-water mixture yielded after the expansion and cooling is recycled to the extraction medium circuit.

22. A reactor for carrying out the process according to claim 1, characterised by two serially arranged extraction vessels each of which is provided with an extraction medium circuit, wherein each circuit has its own heat-exchanger for heating the extraction medium.

23. A reactor according to claim 2, characterised in that the charging system (10) is provided with a cyclone separator (34) for condensing the solvent vapours.

## Revendications

1. Procédé de désagrégation en continu de matières en fibres végétales, notamment de copeaux de bois, par traitement par un mélange d'alcool et d'eau à haute température et sous forte pression, les matières en fibres végétales étant imprégnées de ce mélange d'alcool et d'eau dans une installation d'imprégnation, envoyées dans un réacteur et soumises ensuite à un lavage, caractérisé en ce que l'opération effectuée dans le réacteur comporte deux stades, le premier stade comportant une extraction effectuée avec un mélange de méthanol et d'eau dans une proportion de 90 à 10% en poids pendant une durée de 120 à 40 minutes à une température de 180 à 210°C et avec un pH de 4,9 à 3,8, les matières en fibres végétales étant ensuite amenées au deuxième stade et le deuxième stade comportant une autre extraction effectuée avec addition du même liquide d'extraction dans des conditions analogues aux conditions déjà indiquées, mais avec davantage d'eau que dans le premier stade, pendant une durée de 80 à 10 minutes à une température de 150 à 190°C avec addition d'une solution aqueuse de soude dans une proportion de 5 à 30% en poids, de préférence de 20 à 25% en poids de soude rapportée à des matières en fibres végétales de siccité absolue, et d'anthraquinone dans une proportion de 5 à 30% en poids, de préférence de 0,08% d'anthraquinone rapportée aux matières en fibres végétales de siccitié absolue, en ce qu'à chaque stade une partie du liquide d'extraction saturé de produits d'extraction est évacuée en continu et que les matières en fibres végétales sont, après l'extraction, soumises à un lavage.

2. Procédé selon la revendication 1, caractérisé en ce qu'au premier stade la proportion du mélange de méthanol et d'eau est de 65 à 45% en poids, que la durée de l'opération est de 70 à 50 minutes, la température de 195 à 205°C et le pH de 4,0 à 4,5 et en ce qu'au deuxième stade on choisit une température de 160 à 175°C.

3. Procédé de désagrégation en continu de matières en fibres végétales selon l'une des revendications 1 ou 2, caractérisé en ce que les matières en fibres végétales sont amenées à contre-courant du liquide d'extraction.

4. Procédé de désagrégation en continu de matières en fibres végétales selon l'une des revendications 1 à 3, caractérisé en ce que, par rapport aux matières en fibres végétales, le volume de liquide d'extraction mis en œuvre est de 3 à 20 fois, de préférence de 7 à 10 fois celui des matières en fibres végétales de siccité absolue.

5. Procédé de désagrégation en continu de matières en fibres végétales selon l'une des revendications 1 à 4, caractérisé en ce que la pression dans le réacteur dépasse 10 bars et est de préférence de 12 à 14 bars.

6. Procédé de désagrégation en continu de matières en fibres végétales selon l'une des revendications 1 à 5, caractérisé en ce que, après l'extraction, les matières en fibres végétales sont soumises à un deuxième lavage.

7. Procédé de désagrégation en continu de matières en fibres végétales selon l'une des revendications 1 à 6, caractérisé en ce que le premier et le deuxième lavage sont effectués avec de l'eau.

8. Procédé de désagrégation en continu de matières en fibres végétales selon l'une des revendications 1 à 7, caractérisé en ce que l'eau du premier lavage est à une température de 40 à 50°C.

9. Procédé de désagrégation en continu de matières en fibres végétales selon l'une des revendications 1 à 8, caractérisé en ce que les opérations de lavage s'effectuent à contre-courant.

10. Procédé de désagrégation en continu de matières en fibres végétales selon l'une des revendications 1 à 9, caractérisé en ce que, entre les opérations de lavage, on effectue un strippage pour la récupération du solvant.

11. Procédé de désagrégation en continu de matières en fibres végétales selon l'une des revendications 1 à 10, caractérisé en ce que, après le premier stade, on effectue un lavage intermédiaire avec le solvant d'extraction du premier stade dans les conditions de mélange indiquées, le solvant de lavage ayant une température de 160 à 140°C et la température de la zone de lavage étant de 175 à 170°C.

12. Procédé de désagrégation en continu de matières en fibres végétales selon l'une des revendications 1 à 11, caractérisé en ce que les liquides d'extraction pour les différents stades de l'extraction sont amenés dans des circuits différents.

13. Procédé de désagrégation en continu de matières en fibres végétales selon l'une des revendications 1 à 12, caractérisé en ce que chaque circuit comporte un échangeur de chaleur pour le réglage de la température du solvant d'extraction.

14. Procédé de désagrégation en continu de matières en fibres végétales selon l'une des revendications 1 à 13, caractérisé en ce que chaque circuit comporte un dispositif d'addition du solvant d'extraction qui permet de maintenir constante à la valeur voulue la concentration du mélange du solvant d'extraction.

15. Procédé de désagrégation en continu de matières en fibres végétales selon la revendication 14, caractérisé en ce que dans chaque circuit de chaque stade on introduit une quantité de produit d'extraction nouvelle représentant de 10 à 60% et de préférence 30% du volume du mélange du solvant d'extraction.

16. Procédé de désagrégation en continu de matières en fibres végétales selon l'une des revendications 1 à 15, caractérisé en ce que le liquide d'extraction provenant du premier stade d'extraction est soumis pour la séparation des produits d'extraction, à une détente et à une réfrigération et en ce que les matières d'extraction séparées sont envoyées à un bain de précipitation pour la précipitation de la lignose.

17. Procédé de désagrégation en continu de matières en fibres végétales selon la revendication 16, caractérisé en ce que la lignose est séparée dans un filtre ou une centrifugeuse et soumise à un séchage.

18. Procédé de désagrégation en continu de matières en fibres végétales selon la revendication 17, caractérisé en ce que la solution sucrée qui reste après la séparation de la lignose est soumise à une hydrolyse ultérieure suivie d'une récupération du sucre ou d'une deuxième filtration.

19. Procédé de désagrégation en continu de matières en fibres végétales selon l'une des revendications 1 à 13, caractérisé en ce que le liquide d'extraction provenant du deuxième stade d'extraction est soumis, pour la séparation des matières d'extraction, à une détente ou à une réfrigération et en ce que les matières d'extraction séparées sont soumises à une neutralisation suivie d'une filtration et d'un séchage de la lignose.

20. Procédé de désagrégation en continu de matières en fibres végétales selon la revendication 19, caractérisé en ce que le résidu de la filtration est envoyé à des installations de concentration par évaporation et de préparation de sels.

21. Procédé de désagrégation en continu de matières en fibres végétales selon l'une des revendications 16 à 20, caractérisé en ce que le mélange de méthanol et d'eau résultant de la détente et de la réfrigération est recyclé dans le circuit des produits d'extraction.

22. Réacteur pour l'application du procédé selon la revendication 1, caractérisé en ce qu'il comprend deux récipients montés l'un à la suite de l'autre qui comportent chacun un circuit de solvant d'extraction, chacun de ces circuits comportant son propre échangeur de chaleur pour le chauffage du solvant d'extraction.

23. Réacteur selon la revendication 22, caractérisé en ce que le système d'introduction (10) comporte un séparateur à cyclone (34) pour la condensation des vapeurs de produit de solution.

FIG.1

FIG. 2